# EUROPEAN PATENT APPLICATION

(11) **EP 3 940 262 A1**
(43) Date of publication of application: **19.01.2022**
(21) Application number: 20769433.2
(22) Date of filing: 09.03.2020
(51) Int. Cl.: F16H 25/20, F16H 25/22, A61G 7/043, A47C 17/04

(54) **BED OSCILLATION ATTACHMENT, AND BED OSCILLATION DEVICE**

(30) Priority: 13.03.2019 JP 2019045616
(71) Applicant: JTEKT Corporation, Kariya-shi Aichi-ken, 448-8652 (JP)
(72) Inventor: SUMASU, Hiroshi, Osaka-shi, Osaka 542-8502 (JP); HIEDA, Takahito, Osaka-shi, Osaka 542-8502 (JP)
(74) Representative: Winter, Brandl - Partnerschaft mbB
(86) International application number: PCT/JP2020/009913
(87) International publication number: WO 2020/184499

(57) **Abstract**

This bed oscillation attachment is provided with a support unit for supporting a bed, and a drive unit for causing the support unit to perform a reciprocating linear motion to cause the bed to oscillate. The drive unit includes a motor and a conversion mechanism for converting a rotating motion of the motor into a reciprocating linear motion. The conversion mechanism is a screw device provided with a screw shaft, a nut, a plurality of balls, and a recirculating member which indefinitely recycles the plurality of balls between a first helical groove of the screw shaft and a second helical groove of the nut. One of the screw shaft and the nut includes a rotating member configured to rotate by means of the rotating motion of the motor, and the other of the screw shaft and the nut includes a reciprocating member configured to perform a reciprocating linear motion by way of the balls in response to the rotation of the rotating member.

## Description

### TECHNICAL FIELD

The present disclosure relates to an attachment for oscillating a bed and a bed oscillating device.

### BACKGROUND ART

In recent years, it is desirable to improve the quality of sleep, and as an effective method thereof, it is known to oscillate a bed or a mattress during sleep. Examples of a device for oscillating a bed or the like include a device provided with an oscillating mechanism in a dedicated bed frame (see, for example, JP2015-054146A) and a device provided with an oscillating mechanism inside a dedicated mattress (see, for example, JP2017-051552A).

When the oscillating mechanism described in JP2015-054146A or JP2017-051552A is introduced, a dedicated bed frame or mattress is newly purchased to replace a bed frame or mattress used in a related art. However, since the bed frame and the mattress are expensive and are selected according to the preference of an individual, there is a problem that it is difficult for the user to introduce the oscillating mechanism.

### SUMMARY OF INVENTION

The present disclosure provides an attachment for oscillating a bed and a bed oscillating device capable of oscillating the bed with an inexpensive configuration without replacing an existing bed.

### SOLUTION TO PROBLEM

(1) According to an aspect of the present disclosure, an attachment for oscillating a bed includes: at least one support portion attached to leg portions or a frame of the bed and supporting the bed; and a driving unit configured to linearly reciprocate the at least one support portion, such that the bed is oscillated. The driving unit includes a motor and a conversion mechanism configured to convert a rotational motion of the motor into a reciprocating linear motion. The conversion mechanism is a screw device that includes a screw shaft having a first spiral groove formed on an outer periphery thereof, a nut disposed at an outer peripheral side of the screw shaft and having a second spiral groove formed on an inner periphery thereof, a plurality of balls rollably disposed between the first spiral groove and the second spiral groove, and a circulation member configured to endlessly circulate the plurality of balls between the first spiral groove and the second spiral groove. One of the screw shaft and the nut includes a rotating member configured to rotate in accordance with the rotational motion of the motor, and the other of the screw shaft and the nut includes a reciprocating member configured to be linearly reciprocated via the balls in accordance with a rotation of the rotating member.

According to the aspect of the present disclosure, the bed oscillating attachment can oscillate the bed by causing the support portion to reciprocate linearly by the driving unit in a state in which the support portion is attached to the leg portion or the frame of the bed to support the bed. Accordingly, since it is not necessary to replace the existing bed, the bed can be oscillated with an inexpensive configuration. Further, since the driving unit causes the support portion to reciprocate linearly by a ball screw mechanism having excellent load bearing properties, the bed can be oscillated while being supported even if the bed is heavy.

(2) According to another aspect of the present disclosure, a rotation axis of the motor and a rotation axis of the rotating member are preferably coincident with each other.

In this case, the size of the entire attachment can be reduced even when the motor having a large diameter is used, as compared with a case where the rotation axis of the motor and the rotation axis of the rotating member do not coincide with each other. Further, since a rotation torque of the motor is increased by using the motor having a large diameter, even if a screw lead of the rotating member is widened, the rotating member can be rotated without any load. Accordingly, by increasing a moving distance per rotation of the rotating member, a rotation speed thereof can be reduced, so that noise suppression of the driving unit can be achieved.

(3) According to another aspect of the present disclosure, the rotation axis of the motor and the rotation axis of the rotating member may be not coincident with each other, and the reciprocating member may be the nut.

In this case, since the rotation axis of the motor and the rotation axis of the rotating member do not coincide with each other, the rotation of the motor can be sufficiently decelerated and transmitted to the rotating member. Further, since the reciprocating member that reciprocates linearly together with the support portion is a nut, when the support portion reciprocates linearly in the upper-lower direction, a height range in which the support portion moves in the upper-lower direction can be reduced as compared with a case where the rotation axis of the motor and the rotation axis of the rotating member coincide with each other. Accordingly, when the leg portion or the frame of the bed is supported by the support portion, the height of the upper surface of the bed can be prevented from increasing.

(4) According to another aspect of the present disclosure, the at least one support portion preferably includes a plurality of support portions corresponding to the leg portions or the frame having different shapes.

In this case, the bed swinging attachment can be used for various beds having leg portions or a frame of different shapes.

(5) According to another aspect of the present disclosure, a bed oscillating device includes: the attachment for oscillating the bed including a plurality of attachments according to any one of the above-described (1) to (4); and a control unit configured to perform a control of driving each motor provided in the plurality of attachments.

According to the bed oscillating device of the aspect of the present disclosure, similar operation and effect as those of the bed oscillating attachment described above is obtained. Further, the weight of the bed can be dispersed and supported by the support portions of the plurality of bed oscillating attachments. Further, since the control unit controls to drive of the motors of the plurality of bed oscillating attachments, a degree of freedom of the oscillating operation of the bed can be improved.

(6) According to another aspect of the present disclosure, the control unit preferably performs a control of individually driving each motor provided in the plurality of attachments.

In this case, for example, the bed can be oscillated such that the upper surface thereof undulates, and the degree of freedom of the oscillating operation of the bed can be improved.

(7) According to another aspect of the present disclosure, the control unit preferably performs a control of driving the motor, such that at least one of a motion direction, an amplitude, and a cycle related to a reciprocating linear motion of a support portion of the attachment is changed in accordance with a passage of time.

In this case, for example, the bed can be oscillated by the oscillating operation suitable for the user's falling asleep, sleeping, and waking up, and the degree of freedom of the oscillating operation of the bed can be further improved.

According to the aspects of the present disclosure, the bed can be oscillated with an inexpensive configuration without replacing the existing bed.

### BRIEF DESCRIPTION OF DRAWINGS

Fig. 1 is a schematic diagram illustrating a bed oscillating device according to a first embodiment of the present disclosure.
Fig. 2 is a schematic cross-sectional view illustrating a bed oscillating attachment of the bed oscillating device.
Fig. 3 is a perspective view illustrating a first modification of a support portion of the bed oscillating attachment.
Fig. 4A is a perspective view illustrating a second modification of the support portion.
Fig. 4B is a side view illustrating the second modification of the support portion.
Fig. 5 is a perspective view illustrating a third modification of the support portion.
Fig. 6 is a schematic cross-sectional view illustrating a bed oscillating attachment of a bed oscillating device according to a second embodiment of the present disclosure.

### DESCRIPTION OF EMBODIMENTS

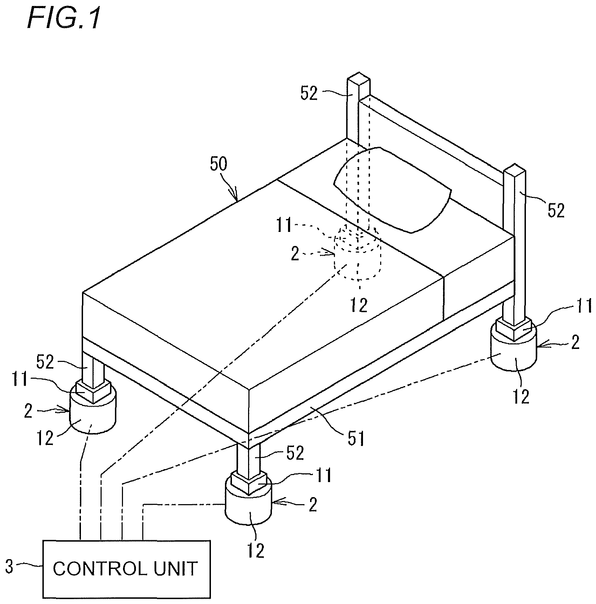

Fig. 1 is a schematic diagram illustrating a bed oscillating device according to a first embodiment of the present disclosure. Abed oscillating device 1 of the present embodiment includes a plurality of (four in the illustrated example) bed oscillating attachments 2 that support and oscillate a bed 50 from below, and a control unit 3 that controls to drive driving units 12 (described later) of the bed oscillating attachments 2. Hereinafter, the bed oscillating attachment 2 is also simply referred to as an "attachment 2".

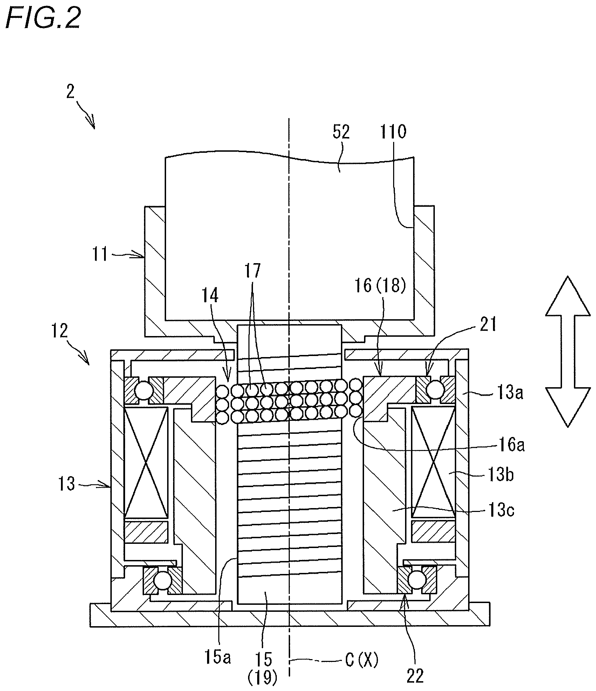

Fig. 2 is a schematic cross-sectional view illustrating the attachment 2. In Figs. 1 and 2, the attachment 2 includes support portions 11 that support the bed 50. The support portions 11 are attached to leg portions 52 respectively provided at four corners of a bed frame (a frame) 51 of the bed 50. The support portion 11 of the present embodiment is formed of a box-shaped member whose upper side is open, and has a recessed portion 110 into which a lower end portion of the leg portion 52 is inserted.

The recessed portion 110 has a shape conforming to the shape of the leg portion 52. In the present embodiment, since the leg portion 52 is formed in a quadrangular prism shape, the recessed portion 110 is formed in a quadrangular concave shape. Accordingly, a lower end portion of the leg portion 52 is inserted into the recessed portion 110 of the support portion 11 from above and supported.

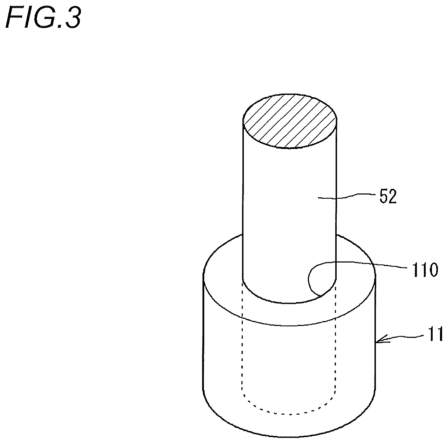

Fig. 3 is a perspective view illustrating a first modification of the support portion 11. The support portion 11 of the present modification has a recessed portion 110 conforming to the shape of the leg portion 52 formed in a cylindrical shape. Specifically, the support portion 11 of the present modification is formed of a bottomed cylindrical member whose upper side is open, and the recessed portion 110 is formed in a circular and recessed shape. An outer shape of the support portion 11 may be another shape such as a bottomed polygonal shape, in addition to the bottomed cylindrical shape.

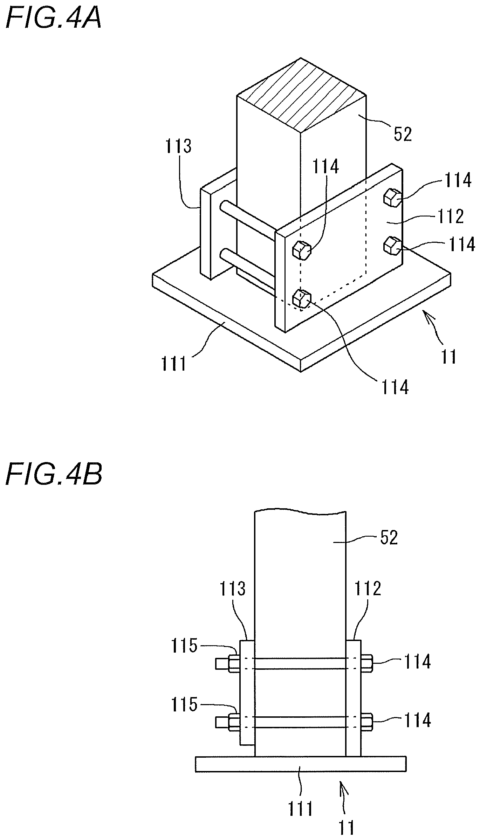

Fig. 4A is a perspective view illustrating a second modification of the support portion 11, and Fig. 4B is a side view illustrating the support portion 11. In Figs. 4A and 4B, the support portion 11 of the present modification includes a base plate portion 111, a fixed plate portion 112, a movable plate portion 113, and a plurality of bolts 114 and nuts 115.

The fixed plate portion 112 is fixed so as to rise perpendicularly to an upper surface of the base plate portion 111. The movable plate portion 113 is disposed to face the fixed plate portion 112 with the leg portion 52 placed on the upper surface of the base plate portion 111 interposed therebetween. The fixed plate portion 112 and the movable plate portion 113 are connected by the bolts 114 and the nuts 115 at positions that do not interfere with the leg portion 52.

With the above configuration, the bolt 114 or the nut 115 is tightened to pull the movable plate portion 113 toward a fixed plate portion 112 side, so that the lower end portion of the leg portion 52 is supported in a state of being sandwiched between the fixed plate portion 112 and the movable plate portion 113. As described above, since the support portion 11 of the present modification supports the leg portion 52 by sandwiching the leg portion 52 between the fixed plate portion 112 and the movable plate portion 113, the support portion 11 can also support columnar or other shaped leg portions 52 in addition to the quadrangular prism shaped leg portion 52. Accordingly, the attachment 2 can be used for various beds 50 having leg portions 52 of different shapes.

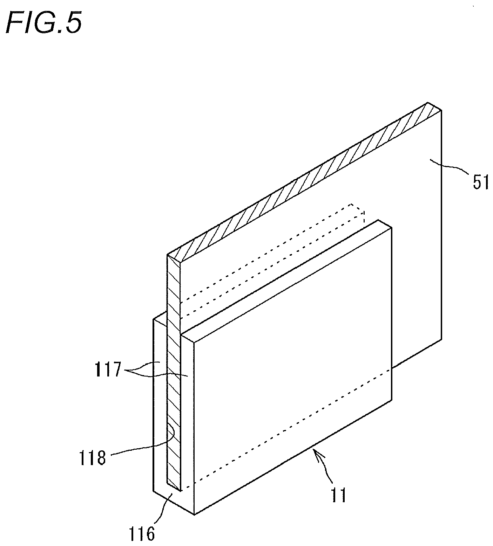

Fig. 5 is a perspective view illustrating a third modification of the support portion 11. The support portion 11 of the present modification is attached to the bed frame 51 to support the bed 50. The support portion 11 includes a bottom plate portion 116 and a pair of side plate portions 117 extending upward from both end portions of the bottom plate portion 116 in a width direction, and a recessed portion 118 into which a lower end portion of the bed frame 51 is inserted is formed by the bottom plate portion 116 and the pair of side plate portions 117. Accordingly, the lower end portion of the bed frame 51 is inserted into the recessed portion 118 of the support portion 11 from above and supported. The support portion 11 of the present modification is particularly effective in the case of supporting the bed 50 that does not include the leg portions 52.

The attachments 2 may include, for example, the plurality of support portions 11 illustrated in Figs. 2 to 5, and the plurality of support portions 11 may be replaced with support portions 11 corresponding to each shape of the bed frame 51 and the leg portions 52 of the bed 50. Accordingly, the attachment 2 can be further used for various beds 50.

Referring back to Fig. 2, the attachment 2 includes the driving unit 12 that causes the support portion 11 to reciprocate linearly in an upper-lower direction to oscillate the bed 50. The driving unit 12 includes a motor 13 and a screw device 14 that is a conversion mechanism for converting a rotational motion of the motor 13 into a reciprocating linear motion. The screw device 14 is, for example, a ball screw.

The screw device 14 includes a screw shaft 15, a nut 16, a plurality of balls 17, and a circulation member (not illustrated).

A first spiral groove 15a is formed on an outer periphery of the screw shaft 15. The nut 16 is coaxially disposed at an outer peripheral side of the screw shaft 15, and a second spiral groove 16a is formed on an inner periphery of the nut 16.

The plurality of balls 17 are rollably disposed between the first spiral groove 15a of the screw shaft 15 and the second spiral groove 16a of the nut 16. The nut 16 is provided with the circulation member, and the circulation member allows the plurality of balls 17 to be infinitely circulated between the first spiral groove 15a and the second spiral groove 16a.

The motor 13 includes a housing 13a, a stator 13b fixed to an inner periphery of the housing 13a, and a rotor 13c disposed at an inner peripheral side of the stator 13b.

The screw shaft 15 of the screw device 14 is inserted into an inner peripheral side of the rotor 13c from an upper side of the housing 13a, and is disposed coaxially with the rotor 13c. The screw shaft 15 is supported by a guide mechanism (not illustrated) so as to be movable in the upper-lower direction with respect to the housing 13a in a state in which the screw shaft 15 is not rotatable about a rotation axis C of the motor 13.

A lower end portion of the nut 16 of the screw device 14 is fixed coaxially with the rotor 13c at an upper end of the rotor 13c. The nut 16 is rotatably supported by the housing 13a via a first rolling bearing 21. A lower end portion of the rotor 13c is rotatably supported by the housing 13a via a second rolling bearing 22. Accordingly, the rotor 13c and the nut 16 are supported by the housing 13a so as to be rotatable about the rotation axis C of the motor 13.

With the above configuration, when the motor 13 is driven to rotate the rotor 13c forward or reversely about the rotation axis C, the nut 16 rotates forward or reversely together with the rotor 13c by the rotational motion. The rotational motion of the nut 16 is converted into a reciprocating linear motion of the screw shaft 15 via the plurality of balls 17. Accordingly, the support portion 11 of the attachment 2 reciprocates linearly in the upper-lower direction with respect to the housing 13a together with the screw shaft 15.

Therefore, in the screw device 14 of the present embodiment, the nut 16 serves as a rotating member 18 that rotates by the rotational motion of the motor 13, and the screw shaft 15 serves as a reciprocating member 19 that reciprocates linearly via the balls 17 by the rotation of the rotating member 18. Further, in the present embodiment, the rotation axis C of the motor 13 and a rotation axis X of the rotating member 18 (the nut 16) coincide with each other.

Further, for fixing the reciprocating member 19 (the screw shaft 15 in the present embodiment) to the support portion 11, a mechanical fixing method using metal fittings such as screws or bolts and nuts is used. Accordingly, load bearing properties are more excellent than those of a fixing method such as adhesion fixing or press-in fixing.

In Figs. 1 and 2, the control unit 3 of the bed oscillating device 1 individually controls to drive the motors 13 of the driving units 12 of the four attachments 2 in a wired or wireless manner, and causes the support portions 11 of the four attachments 2 to reciprocate linearly and individually in the upper-lower direction. Accordingly, the bed 50 can not only be oscillated up and down while being held in a horizontal state, but also tilted in various directions such as a longitudinal direction, a lateral direction, and a diagonal direction, and an upper surface (a surface on which a user lies) of the bed 50 can be oscillated in a wavy manner.

The control unit 3 controls to drive the motor 13 so as to change a motion direction (upper and lower directions), an amplitude, and a cycle of the reciprocating linear motion of the support portion 11 of each attachment 2 with the passage of time. Accordingly, since a motion range and a motion speed of the support portion 11 of each attachment 2 can be changed with the passage of time, for example, when the user falls asleep, is sleeping, and wakes up, the bed 50 can be oscillated by an oscillating operation suitable for each scene.

The control unit 3 controls to drive the motor 13 of each attachment 2 so as to stop the reciprocating linear motion of the support portion 11 of each attachment 2 at any height position. Accordingly, for example, when the user is not lying on the bed 50, the bed 50 is held in a state of being lifted up to a predetermined height position, so that a lower side of the bed 50 can be cleaned.

As described above, according to the bed oscillating device 1 of the present embodiment, the bed 50 can be oscillated by causing the support portion 11 to reciprocate linearly by the driving unit 12 in a state in which the support portion 11 is attached to the leg portion 52 of the bed 50 to support the bed 50. Accordingly, since it is not necessary to replace the existing bed 50, the bed 50 can be oscillated with an inexpensive configuration. Further, since the driving unit 12 causes the support portion 11 to reciprocate linearly by the screw device 14 having excellent load bearing properties, the bed 50 can be oscillated while being supported even if the bed 50 is heavy. Further, the screw device 14 is used because the screw device 14 has a large reduction ratio in addition to the excellent load bearing properties as compared with other conversion mechanisms. A large rotation torque can be obtained by the large reduction ratio, and as a result, even if a screw reed of the screw device 14 is widened, the rotating member 18 (the nut 16) can be rotated without any load. Accordingly, by increasing a moving distance of the reciprocating member 19 (the screw shaft 15) per rotation of the rotating member 18, a rotation speed thereof can be reduced, so that noise suppression of the driving unit 12 can be achieved.

Further, since the rotation axis C of the motor 13 and the rotation axis X of the rotating member 18 (the nut 16) coincide with each other, the size of the entire attachment 2 can be reduced even when the motor 13 having a large diameter is used, as compared with a case where the rotation axis C and the rotation axis X do not coincide with each other. Further, since the rotation torque of the motor 13 is increased by using the motor 13 having a large diameter, even if the screw lead of the screw device 14 is widened, the rotating member 18 can be rotated without any load. Accordingly, by further increasing the moving distance of the reciprocating member 19 per rotation of the rotating member 18, the rotation speed thereof can be further reduced, so that further noise suppression of the driving unit 12 can be achieved.

Further, since the bed 50 is supported by the support portions 11 of the plurality of attachments 2, the weight of the bed 50 can be dispersed and supported. Further, since the control unit 3 individually controls to drive the motors 13 of the plurality of attachments 2, for example, the bed 50 can be oscillated such that the upper surface thereof undulates, and a degree of freedom of the oscillating operation of the bed 50 can be improved.

Further, the control unit 3 controls to drive the motor 13 so as to change the motion direction, the amplitude, and the cycle of the reciprocating linear motion of the support portion 11 in the attachment 2 with the passage of time. For this reason, for example, the bed 50 can be oscillated by the oscillating operation suitable for the user's falling asleep, sleeping, and waking up, and the degree of freedom of the oscillating operation of the bed 50 can be further improved.

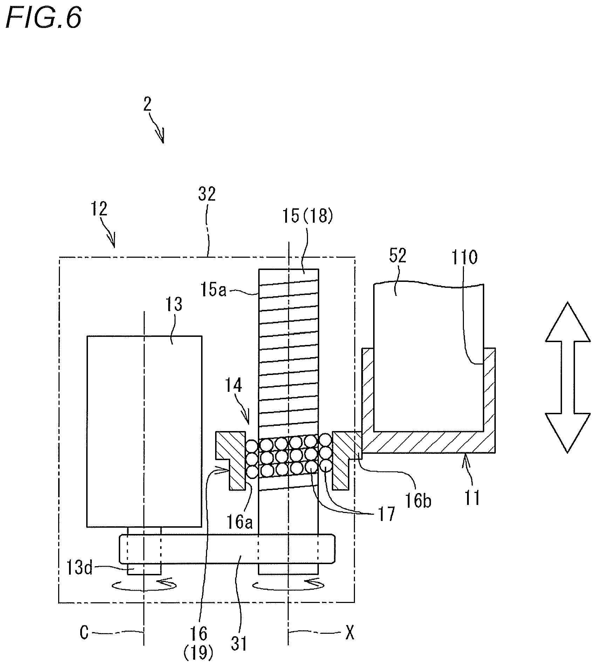

Fig. 6 is a schematic cross-sectional view illustrating an attachment of a bed oscillating device according to a second embodiment of the present disclosure. The attachment 2 of the present embodiment is different from the attachment 2 of the first embodiment in the configuration of the driving unit 12.

The driving unit 12 of the present embodiment includes a motor 13, a screw device 14, a transmission mechanism 31 that transmits rotational motion of the motor 13 to the screw device 14, and a housing 32 that accommodates the motor 13, the screw device 14, and the transmission mechanism 31.

The motor 13 includes an output shaft 13d that rotates together with a rotor (not illustrated). The screw device 14 is disposed outside the motor 13, and the screw shaft 15 of the screw device 14 rotates about the rotation axis X different from the rotation axis C of the motor 13. The rotational motion of the output shaft 13d of the motor 13 is transmitted to a lower end portion of the screw shaft 15 via the transmission mechanism 31. As the transmission mechanism 31, for example, an endless belt, an endless chain, meshing of gears, or the like is used.

The nut 16 of the screw device 14 is supported by the guide mechanism (not illustrated) so as to be movable in the upper-lower direction with respect to the housing 32 in a state in which the nut 16 is not rotatable about the rotation axis X of the screw shaft 15. Accordingly, the nut 16 reciprocates linearly in the upper-lower direction along the rotation axis X via the plurality of balls 17 by forward rotation or reverse rotation of the screw shaft 15. A part of an outer peripheral side of the nut 16 is a protruding portion 16b that protrudes to the outside of the housing 32, and the support portion 11 of the attachment 2 is detachably attached to the protruding portion 16b.

With the above configuration, when the motor 13 is driven to rotate the output shaft 13d forward or reversely about the rotation axis C, the rotational motion is transmitted to the screw shaft 15 via the transmission mechanism 31, and the screw shaft 15 rotates forward or reversely about the rotation axis X. The rotational motion of the screw shaft 15 is converted into the reciprocating linear motion of the nut 16 via the plurality of balls 17. Accordingly, the support portion 11 of the attachment 2 reciprocates linearly in the upper-lower direction with respect to the housing 32 together with the nut 16.

Therefore, in the screw device 14 of the present embodiment, the screw shaft 15 serves as the rotating member 18 that rotates by the rotational motion of the motor 13, and the nut 16 serves as the reciprocating member 19 that reciprocates linearly via the balls 17 by the rotation of the rotating member 18. Further, in the present embodiment, the rotation axis C of the motor 13 and the rotation axis X of the rotating member 18 (the screw shaft 15) do not coincide with each other.

Other configurations of the present embodiment are similar to those of the first embodiment, and thus a description thereof will be omitted.

As described above, also in the bed oscillating device 1 of the present embodiment, the bed 50 can be oscillated by causing the support portion 11 to reciprocate linearly by the driving unit 12 in a state in which the support portion 11 is attached to the leg portion 52 of the bed 50 to support the bed 50. Accordingly, since it is not necessary to replace the existing bed 50, the bed 50 can be oscillated with an inexpensive configuration. Further, since the driving unit 12 causes the support portion 11 to reciprocate linearly by the screw device 14 having excellent load bearing properties, the bed 50 can be oscillated while being supported even if the bed 50 is heavy. Further, the screw device 14 is used because the screw device 14 has a large reduction ratio in addition to excellent load bearing properties as compared with other conversion mechanisms. A large rotation torque can be obtained by the large reduction ratio, and as a result, even if the screw reed of the screw device 14 is widened, the rotating member 18 (the screw shaft 15) can be rotated without any load. Accordingly, by increasing the moving distance of the reciprocating member 19 (the nut 16) per rotation of the rotating member 18, the rotation speed thereof can be reduced, so that noise suppression of the driving unit 12 can be achieved.

Further, since the rotation axis C of the motor 13 and the rotation axis X of the rotating member 18 (the screw shaft 15) do not coincide with each other, the rotation of the motor 13 can be sufficiently decelerated and transmitted to the rotating member 18 via the transmission mechanism 31. Further, since the reciprocating member 19 that reciprocates linearly in the upper-lower direction together with the support portion 11 is the nut 16, a height range in which the support portion 11 moves in the upper-lower direction can be reduced as compared with a case where the rotation axis C and the rotation axis X coincide with each other (see Fig. 2). Accordingly, when the leg portion 52 of the bed 50 is supported by the support portion 11, the height of the upper surface of the bed 50 can be prevented from increasing.

The embodiments disclosed above are illustrative and non-restrictive in every respect. That is, each of the bed oscillating attachment and the bed oscillating device of the present disclosure is not limited to the illustrated forms, and may have other forms within the scope of the present disclosure.

For example, although the bed 50 has been described as an example of the bed on which the bed oscillating device 1 is mounted in the above-described embodiments, a bed used for sleeping other than the bed 50 may be applied as the bed. For example, in a case where an occupant is asleep in a state of sitting on a seat of an automobile (in particular, an autonomous driving vehicle), the seat may be applied as the bed.

Although the attachment 2 of the above-described embodiments oscillates the bed 50 in the upper-lower direction, the attachment 2 may oscillate the bed 50 in a horizontal direction. Further, in the driving unit 12 of the attachment 2 of the above-described embodiments, the screw device 14 is used as the conversion mechanism, but another conversion mechanism such as a rack and pinion may be used. Further, although the control unit 3 of the bed oscillating device 1 of the above-described embodiments individually controls to drive the motors 13 of the plurality of bed oscillating attachments 2, the control unit 3 may collectively control to drive the motors 13.

Although the four attachments 2 of the above-described embodiments each include the driving unit 12, at least one attachment 2 may not include the driving unit 12. In this case, it is preferable that the support portion 11 of the attachment 2 not including the driving unit 12 is stationary so as not to be operated following the reciprocating linear motion of the support portion 11 of the attachment 2 including the driving unit 12. However, in a case where the bed 50 is simply inclined (for example, inclined such that only the head of the user is raised), the support portion 11 of the attachment 2 not including driving unit 12 may be passively operated by, for example, a coil spring or the like following the reciprocating linear motion of the support portion 11 of the attachment 2 including the driving unit 12. As described above, since the bed oscillating device 1 includes the attachment 2 not including the driving unit 12, the bed 50 can be oscillated with a further inexpensive configuration.

In the bed oscillating device 1 of the above-described embodiments, the leg portions 52 at the four corners of the bed frame 51 are supported by the attachments 2 each including the driving unit 12, but in addition to these attachments 2, a central portion of the bed frame 51 may be supported by the attachment 2 not including the driving unit 12. In this case, it is preferable that the attachment 2 not including the driving unit 12 passively operates the support portion 11 by a coil spring or the like as described above.

The present application is based on Japanese Patent Application No. 2019-045616 filed on March 13, 2019, the contents of which are incorporated herein by reference.

## Claims

1. An attachment for oscillating a bed comprising:
at least one support portion attached to leg portions or a frame of the bed and supporting the bed; and
a driving unit configured to linearly reciprocate the at least one support portion, such that the bed is oscillated,
wherein the driving unit includes a motor and a conversion mechanism configured to convert a rotational motion of the motor into a reciprocating linear motion,
wherein the conversion mechanism is a screw device including: a screw shaft having a first spiral groove formed on an outer periphery thereof; a nut disposed at an outer peripheral side of the screw shaft and having a second spiral groove formed on an inner periphery thereof; a plurality of balls rollably disposed between the first spiral groove and the second spiral groove; and a circulation member configured to endlessly circulate the plurality of balls between the first spiral groove and the second spiral groove,
wherein one of the screw shaft and the nut includes a rotating member configured to rotate in accordance with the rotational motion of the motor, and
wherein the other of the screw shaft and the nut includes a reciprocating member configured to be linearly reciprocated via the balls in accordance with a rotation of the rotating member.

2. The attachment for oscillating the bed according to claim 1,
wherein a rotation axis of the motor and a rotation axis of the rotating member are coincident with each other.

3. The attachment for oscillating the bed according to claim 1,
wherein a rotation axis of the motor and a rotation axis of the rotating member are not coincident with each other, and
wherein the reciprocating member is the nut.

4. The attachment for oscillating the bed according to any one of claims 1 to 3,
wherein the at least one support portion includes a plurality of support portions corresponding to the leg portions having shapes different from each other or the frame.

5. Abed oscillating device comprising:
a plurality of attachments each corresponding to the attachment for oscillating the bed according to any one of claims 1 to 4; and
a control unit configured to perform a control of driving each motor provided in the plurality of attachments.

6. The bed oscillating device according to claim 5,
wherein the control unit performs a control of individually driving each motor provided in the plurality of attachments.

7. The bed oscillating device according to claim 5 or 6,
wherein the control unit performs a control of driving the motor, such that at least one of a motion direction, an amplitude, and a cycle related to a reciprocating linear motion of a support portion of the attachment is changed in accordance with a passage of time.
